# EUROPÄISCHE PATENTSCHRIFT

(11) **EP 3 433 138 B1**
(45) Veröffentlichungstag und Bekanntmachung des Hinweises auf die Patenterteilung: **02.06.2021**
(21) Anmeldenummer: 16788470.9
(22) Anmeldetag: 20.10.2016
(51) Int. Cl.: B60R 25/24, G07C 9/00

(54) **AUTORISIERUNG DER NUTZUNG EINES KRAFTFAHRZEUGS**
AUTHORIZING THE USE OF A MOTOR VEHICLE
AUTORISATION D'UTILISER UN VÉHICULE À MOTEUR

(30) Priorität: 22.03.2016 DE 102016204746
(43) Veröffentlichungstag der Anmeldung: 30.01.2019
(73) Patentinhaber: Bayerische Motoren Werke Aktiengesellschaft, 80809 München (DE)
(72) Erfinder: HEINBOCKEL, Stefan, 81735 München (DE); WAGATHA, Helmut, 85764 Oberschleissheim (DE); HOCKE, Fredrik, 80336 München (DE); WISTORF, Ralf, 81737 München (DE)
(86) Internationale Anmeldenummer: PCT/EP2016/075175
(87) Internationale Veröffentlichungsnummer: WO 2017/162315

(56) Entgegenhaltungen:
- EP-A2- 0 867 971
- WO-A1-2009/143415
- WO-A1-2015/084852
- DE-B3-102005 013 910
- US-A1- 2013 063 247

## Beschreibung

Die Erfindung betrifft insbesondere ein Verfahren zur Autorisierung der Nutzung eines Kraftfahrzeugs, das mindestens eine erste und eine zweite Antenne aufweist, wobei die erste Antenne und die zweite Antenne räumlich voneinander beabstandet sind. Bei dem Kraftfahrzeug handelt es sich insbesondere um ein zwei- oder vierrädriges Kraftfahrzeug.

Aus der DE 10 2005 013910 B3 ist ein gattungsgemäßes Verfahren zur Autorisierung der Nutzung eines Kraftfahrzeugs bekannt.

Bei solchen bekannten Verfahren ist es wünschenswert, diese gegen Manipulationen weiter zu verbessern.

Die Aufgabe der Erfindung besteht insbesondere in der Bereitstellung eines Verfahrens zur Autorisierung der Nutzung eines Kraftfahrzeugs mit einem verbesserten Schutz gegen Manipulationen.

Diese Aufgabe wird insbesondere durch ein Verfahren zur Autorisierung der Nutzung eines Kraftfahrzeugs mit den Merkmalen des unabhängigen Verfahrensanspruchs gelöst. Vorteilhafte Ausgestaltungen des erfindungsgemäßen Verfahrens sind Gegenstand der abhängigen Verfahrensansprüche.

Das erfindungsgemäße Verfahren geht aus von einem Verfahren zur Autorisierung der Nutzung eines Kraftfahrzeugs, insbesondere ein zwei- oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist.

In einem ersten Schritt sendet die erste Fahrzeugantenne ein erstes Signal aus, das von der Identifikationsgeber-Antenne empfangen wird.

In einem zweiten Schritt ermittelt der Identifikationsgeber zumindest eine der räumlichen Komponenten des ersten elektromagnetischen Feldes des empfangenen ersten Signals, vorzugsweise unter Verwendung eines winkelauflösenden Magnetfeldsensors.

In einem dritten Schritt sendet die zweite Fahrzeugantenne ein zweites Signal aus, das von der Identifikationsgeber-Antenne empfangen wird.

In einem vierten Schritt ermittelt der Identifikationsgeber zumindest eine der räumlichen Komponenten des zweiten elektromagnetischen Feldes des empfangenen zweiten Signals, vorzugsweise unter Verwendung des winkelauflösenden Magnetfeldsensors.

In einem fünften Schritt ermittelt ein erster Rechner, vorzugsweise ein Rechner im Identifikationsgeber, den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals.

Dieses bekannte Verfahren wird erfindungsgemäß weitergebildet, indem in einem weiteren Schritt die erste Fahrzeugantenne anstelle des ersten Signals das zweite Signal oder ein dem zweiten Signal ähnliches Signal aussendet und die zweite Fahrzeugantenne anstelle des zweiten Signals das erste Signal oder ein dem ersten Signal ähnliches Signal aussendet und der Identifikationsgeber nur dann ein erstes Autorisierungssignal an das Kraftfahrzeug sendet, wenn der ermittelte erste Winkel einen vorbestimmten ersten Schwellenwert überschreitet.

Zusammenfassend kann durch das erfindungsgemäße Verfahren mithilfe von mindestens zwei räumlich separierten bzw. beabstandeten Sendern die Position des Empfängers bzw. des Identifikationsgeberswinkelaufgelöst bestimmt werden. Werden die Signale der beabstandeten Sender in manipulativer Absicht durch einen Repeater weitergeleitet, wird die Laufzeit verlängert und die Winkelinformation geht verloren. Das erfindungsgemäße winkelauflösende Verfahren erkennt eine solche Manipulation der Funkstrecke indem die Parallelität der Signale von dem Identifikationsgeber erkannt wird und dieser die Aussendung eines Autorisierungssignals verhindert. Entsprechend einer Weiterbildung des erfindungsgemäßen Verfahrens ist vorgesehen, dass der vorbestimmte erste Schwellenwert von dem Kraftfahrzeug zu dem Identifikationsgeber gesendet, von dem Identifikationsgeber empfangen und der erste Schwellenwert von dem Identifikationsgeber mit dem ermittelten ersten Winkel verglichen wird und der Identifikationsgeber nur dann ein erstes Autorisierungssignal an das Kraftfahrzeug sendet, wenn der ermittelte erste Winkel einen vorbestimmten ersten Schwellenwert überschreitet.

Alternativ oder ergänzend ist bei einer Ausgestaltung des erfindungsgemäßen Verfahrens vorgesehen, dass das erste Signal oder ein dem ersten Signal ähnliches Signal und das zweite Signal oder ein dem zweiten Signal ähnliches Signal mehrfach abwechselnd von der ersten oder der zweiten Fahrzeugantenne gesendet, von dem Identifikationsgeber empfangen und die jeweils ermittelten zeitlich unterschiedlichen Winkel mit dem betreffenden vorbestimmten ersten Schwellenwert und nachfolgend mit dem betreffenden vorbestimmten zweiten Schwellenwert verglichen werden und bei einer jeweiligen Überschreitung des betreffenden ersten und zweiten vorbestimmten Schwellenwerts ein erstes oder ein zweites Autorisierungssignal zur Autorisierung der Nutzung des Kraftfahrzeugs an das Kraftfahrzeug gesendet wird.

Entsprechend einer bevorzugten Ausführungsform des erfindungsgemäßen Verfahrens wird der vorbestimmte erste und/oder ein vorbestimmter zweiter Schwellenwert von dem Kraftfahrzeug in verschlüsselter Datenform und/oder in anderen Daten verborgen zudem Identifikationsgeber gesendet.

Entsprechend einer weiteren bevorzugten Ausgestaltung des erfindungsgemäßen Verfahrens ist vorgesehen, dass die erste Fahrzeugantenne mehrfach unmittelbar hintereinander ein erstes Signal aussendet bevor die zweite Fahrzeugantenne einmal oder mehrfach unmittelbar hintereinander ein zweites Signal aussendet und die ersten und zweiten Signale von dem Identifikationsgeber zum Vergleich mit entsprechenden von dem Kraftfahrzeug zum Identifikationsgeber übertragenen Schwellenwerten empfangen werden.

Bei einer bevorzugten Weiterbildung des erfindungsgemäßen Verfahrens wird die Aussendung des ersten und/oder zweiten Signals zufallsgesteuert von dem Kraftfahrzeug vorgenommen.

Alternativ oder ergänzend ist bei einer Ausgestaltung des erfindungsgemäßen Verfahrens vorgesehen, dass die Signalstärke bzw. Feldstärke der ersten und/oder zweiten Fahrzeugantenne im Verlauf der Autorisierungsprüfung variiert wird.

Entsprechend einer Weiterbildung des erfindungsgemäßen Verfahrens wird die Signalstärke bzw. Feldstärke der ersten und/oder der zweiten Fahrzeugantenne im Verlauf der Autorisierungsprüfung zufallsgesteuert von dem Kraftfahrzeug variiert.

Die vorstehenden erfindungsgemäßen optionalen Maßnahmen sind geeignet Manipulationen zusätzlich deutlich zu erschweren bzw. zu verhindern.

Alternativ oder ergänzend kann bei einer Ausgestaltung des erfindungsgemäßen Verfahrens vorgesehen sein, dass der Zeitabstand zwischen der Aussendung des ersten Signals durch die erste Fahrzeugantenne und der Aussendung des zweiten Signals durch die zweite Fahrzeugantenne zeitlich so kurz - aber verschieden von Null - gewählt wird, dass der vom Fahrer mitgeführte Identifikationsgeber beim Zugehen des Fahrers auf das Fahrzeug weitgehend nicht bewegt wird. Hierdurch wird die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar.

Bei einer Weiterbildung des erfindungsgemäßen Verfahrens ist vorgesehen, dass das Kraftfahrzeug eine weitere, dritte Antenne aufweist, die von der ersten und der zweiten Antenne jeweils räumlich beabstandet ist und dass in analoger Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

Auch diese optionalen Maßnahmen sind in vorteilhafter Weise dazu geeignet, das Risiko von Manipulationen weiter zu verringern bzw. diese deutlich zu erschweren.

Entsprechend einer Ausführungsform des erfindungsgemäßen Verfahrens ist vorgesehen, dass die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

Bei einer Ausgestaltung des erfindungsgemäßen Verfahrens ist vorgesehen, dass die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

Entsprechend einer Weiterbildung des erfindungsgemäßen Verfahrens ist vorgesehen, dass die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

Bei einer bevorzugten Ausführungsform des erfindungsgemäßen Verfahrens ist vorgesehen, dass mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

Bei einer ebenfalls bevorzugten Weiterbildung des erfindungsgemäßen Verfahrens ist vorgesehen, dass mithilfe des Skalarprodukts rechnerisch der Winkel zwischen den beiden Vektoren bestimmt wird.

Die vorstehenden optionalen Maßnahmen sind in vorteilhafter Weise dazu geeignet, das erfindungsgemäße Verfahren in kostengünstiger Weise zu realisieren.

Bei einer bevorzugten Ausführungsform des erfindungsgemäßen Verfahrens ist vorgesehen, dass der ermittelte Winkel einen vorbestimmten Schwellenwert von weitgehend Null Grad überschreitet, insbesondere ein Schwellenwert größer als 1 bis 10 Grad, vorzugsweise 1 bis 5 Grad.

Entsprechend einer bevorzugten Weiterbildung des erfindungsgemäßen Verfahrens ist vorgesehen, dass der Schwellenwert, der größer als Null Grad ist, mit geringer werdender Entfernung des Identifikationsgebers vom Fahrzeug vergrößert wird, wobei die Entfernung vorzugsweise über eine Laufzeitmessung zwischen den Signalen, die zwischen Fahrzeug und Identifikationsgeber ausgetauscht werden, bestimmt wird.

Bei einer bevorzugten Ausführungsform des erfindungsgemäßen Verfahrens ist vorgesehen, dass die erste, zweite und dritte Antenne jeweils auf einer gleichen oder unterschiedlichen Frequenz im Frequenzbereich von 20 kHz bis 140 kHz, vorzugsweise auf ca. 125 kHz, vorzugsweise zeitlich versetzt, senden.

Durch diese vorstehenden optionalen Maßnahmen kann das erfindungsgemäße Verfahren noch sicherer gestaltet werden.

Die Erfindung ermöglicht in vorteilhafter Weise die Bereitstellung eines Fahrzeugzugangssystems zur Autorisierung der Nutzung eines Kraftfahrzeugs, bei dem das Fahrzeugzugangssystem die Ausführung mindestens eines Schritts eines erfindungsgemäßen Verfahrens bewirkt.

Die Erfindung ermöglicht weiter die Bereitstellung eines erfindungsgemäßen Fahrzeugzugangssystems zur Autorisierung der Nutzung eines Kraftfahrzeugs, bei dem das Fahrzeugzugangssystem die Ausführung mindestens eines Schritts eines Verfahrens nach einem der vorstehenden Ansprüche ausführt oder bewirkt und der Identifikationsgeber ein Funkschlüssel oder ein Smartphone ist, vorzugsweise mit einer Identifikationsgeber-Softwareanwendung, wie eine sog. App.

Die Erfindung schlägt ferner ein erfindungsgemäßes Fahrzeugzugangssystem zur Autorisierung der Nutzung eines Kraftfahrzeugs vor, bei dem der Identifikationsgeber ein mit einem Rechnerchip versehenes Smartphone, ein mit einem Rechnerchip versehener Funk-Fahrzeugschlüssel oder eine Chipkarte mit Rechnerchip ist.

Weiter schlägt die Erfindung ein erfindungsgemäßes Fahrzeugzugangssystem zur Autorisierung der Nutzung eines Kraftfahrzeugs vor, bei dem der Identifikationsgeber einen Sensor zur Bestimmung bzw. Ermittlung eines elektromagnetischen Feldes und/oder der Komponenten des elektromagnetischen Feldes aufweist, das von einer oder mehreren Fahrzeugantennen im Bereich des Identifikationsgebers erzeugt worden ist.

Die Erfindung schlägt eine Wegfahrsperre zur Autorisierung der Nutzung eines Kraftfahrzeugs vor, die die Ausführung mindestens eines Schritts eines erfindungsgemäßen Verfahrens bewirkt.

Ebenso schlägt die Erfindung ein Kraftfahrzeug vor, das die Ausführung mindestens eines Schritts eines erfindungsgemäßen Verfahrens bewirkt bzw. an der Ausführung beteiligt ist.

Schließlich wird ein Computerprogrammprodukt zur Steuerung mindestens eines Prozessors, der den Ablauf mindestens eines Schritts eines erfindungsgemäßen Verfahrens bewirkt, vorgeschlagen.

## Patentansprüche

1. Verfahren zur Autorisierung der Nutzung eines Kraftfahrzeugs, insbesondere ein zwei- oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist, mit den folgenden Schritten:
- die erste Fahrzeugantenne sendet ein erstes Signal aus, das von der Identifikationsgeber-Antenne empfangen wird,
- der Identifikationsgeber ermittelt zumindest eine der räumlichen Komponenten des ersten elektromagnetischen Feldes des empfangenen ersten Signals, vorzugsweise unter Verwendung eines winkelauflösenden Magnetfeldsensors,
- die zweite Fahrzeugantenne sendet ein zweites Signal aus, das von der Identifikationsgeber-Antenne empfangen wird,
- der Identifikationsgeber ermittelt zumindest eine der räumlichen Komponenten des zweiten elektromagnetischen Feldes des empfangenen zweiten Signals, insbesondere unter Verwendung des winkelauflösenden Magnetfeldsensors, und
- ein erster Rechner, insbesondere ein Rechner im Identifikationsgeber, ermittelt den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals,
**dadurch gekennzeichnet, dass** in einem weiteren Schritt
- die erste Fahrzeugantenne anstelle des ersten Signals das zweite Signal oder ein dem zweiten Signal ähnliches Signal aussendet und die zweite Fahrzeugantenne anstelle des zweiten Signals das erste Signal oder ein dem ersten Signal ähnliches Signal aussendet und der Identifikationsgeber nur dann ein erstes Autorisierungssignal an das Kraftfahrzeug sendet, wenn der ermittelte erste Winkel einen vorbestimmten ersten Schwellenwert überschreitet.

2. Verfahren zur Autorisierung der Nutzung eines Kraftfahrzeugs nach Anspruch 1, **dadurch gekennzeichnet, dass** der vorbestimmte erste Schwellenwert von dem Kraftfahrzeug zu dem Identifikationsgeber gesendet, von dem Identifikationsgeber empfangen und der erste Schwellenwert von dem Identifikationsgeber mit dem ermittelten ersten Winkel verglichen wird und der Identifikationsgeber nur dann ein erstes Autorisierungssignal an das Kraftfahrzeug sendet, wenn der ermittelte erste Winkel einen vorbestimmten ersten Schwellenwert überschreitet.

3. Verfahren zur Autorisierung der Nutzung eines Kraftfahrzeugs nach einem der vorstehenden Ansprüche, **dadurch gekennzeichnet, dass** das erste Signal oder ein dem ersten Signal ähnliches Signal und das zweite Signal oder ein dem zweiten Signal ähnliches Signal mehrfach abwechselnd von der ersten oder der zweiten Fahrzeugantenne gesendet, von dem Identifikationsgeber empfangen und die jeweils ermittelten zeitlich unterschiedlichen Winkel mit dem betreffenden vorbestimmten ersten Schwellenwert und nachfolgend mit dem betreffenden vorbestimmten zweiten Schwellenwert verglichen werden und bei einer jeweiligen Überschreitung des betreffenden ersten und zweiten vorbestimmten Schwellenwerts ein erstes oder ein zweites Autorisierungssignal zur Autorisierung der Nutzung des Kraftfahrzeugs an das Kraftfahrzeug gesendet wird.

4. Verfahren zur Autorisierung der Nutzung eines Kraftfahrzeugs nach einem der vorstehenden Ansprüche, **dadurch gekennzeichnet, dass** der vorbestimmte erste und/oder ein vorbestimmter zweiter Schwellenwert von dem Kraftfahrzeug in verschlüsselter Datenform und/oder in anderen Daten verborgen zu dem Identifikationsgeber gesendetwird.

5. Verfahren zur Autorisierung der Nutzung eines Kraftfahrzeugs nach einem der vorstehenden Ansprüche, **dadurch gekennzeichnet, dass** die erste Fahrzeugantenne mehrfach unmittelbar hintereinander ein erstes Signal aussendet bevor die zweite Fahrzeugantenne einmal oder mehrfach unmittelbar hintereinander ein zweites Signal aussendet und die ersten und zweiten Signale von dem Identifikationsgeber zum Vergleich mit entsprechenden von dem Kraftfahrzeug zum Identifikationsgeber übertragenen Schwellenwerten empfangen werden.

6. Verfahren zur Autorisierung der Nutzung eines Kraftfahrzeugs nach Anspruch 5, **dadurch gekennzeichnet, dass** die Aussendung des ersten und/oder zweiten Signals zufallsgesteuert von dem Kraftfahrzeug vorgenommen wird.

7. Verfahren zur Autorisierung der Nutzung eines Kraftfahrzeugs nach einem der vorstehenden Ansprüche, **dadurch gekennzeichnet, dass** die Signalstärke bzw. Feldstärke der ersten und/oder zweiten Fahrzeugantenne im Verlauf der Autorisierungsprüfung variiert wird.

8. Verfahren zur Autorisierung der Nutzung eines Kraftfahrzeugs nach Anspruch 7, **dadurch gekennzeichnet, dass** die Signalstärke bzw. Feldstärke der ersten und/oder der zweiten Fahrzeugantenne im Verlauf der Autorisierungsprüfung zufallsgesteuert von dem Kraftfahrzeug variiert wird.

9. Verfahren zur Autorisierung der Nutzung eines Kraftfahrzeugs nach einem der vorstehenden Ansprüche, **dadurch gekennzeichnet, dass** der Zeitabstand zwischen der Aussendung des ersten Signals durch die erste Fahrzeugantenne und der Aussendung des zweiten Signals durch die zweite Fahrzeugantenne zeitlich so kurz, aber verschieden Null, gewählt wird, dass der vom Fahrer mitgeführte Identifikationsgeber beim Zugehen des Fahrers auf das Fahrzeug weitgehend nicht bewegt wird und daher die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar wird.

10. Verfahren zur Autorisierung der Nutzung eines Kraftfahrzeugs nach einem der vorstehenden Ansprüche, **dadurch gekennzeichnet, dass** das Kraftfahrzeug eine weitere, dritte Antenne aufweist, die von der ersten und der zweiten Antenne jeweils räumlich beabstandet ist und dass in analoger Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

11. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

12. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

13. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

14. Verfahren zur Autorisierung der Nutzung eines Kraftfahrzeugs nach einem der vorstehenden Ansprüche, **dadurch gekennzeichnet, dass** mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

15. Verfahren zur Autorisierung der Nutzung eines Kraftfahrzeugs nach einem der vorstehenden Ansprüche, **dadurch gekennzeichnet, dass** mithilfe des Skalarprodukts rechnerisch der Winkel zwischen den beiden Vektoren bestimmt wird.

16. Verfahren zur Autorisierung der Nutzung eines Kraftfahrzeugs nach einem der vorstehenden Ansprüche, **dadurch gekennzeichnet, dass** der ermittelte Winkel einen vorbestimmten Schwellenwert von weitgehend Null Grad überschreitet, insbesondere ein Schwellenwert größer als 1 bis 10 Grad, insbesondere 1 bis 5 Grad.

17. Verfahren zur Autorisierung der Nutzung eines Kraftfahrzeugs nach einem der vorstehenden Ansprüche, **dadurch gekennzeichnet, dass** der Schwellenwert, der größer als Null Grad ist, mit geringer werdender Entfernung des Identifikationsgebers vom Fahrzeug vergrößert wird, wobei die Entfernung insbesondere über eine Laufzeitmessung zwischen den Signalen, die zwischen Fahrzeug und Identifikationsgeber ausgetauscht werden, bestimmt wird.

18. Verfahren zur Autorisierung der Nutzung eines Kraftfahrzeugs nach einem der vorstehenden Ansprüche, **dadurch gekennzeichnet, dass** die erste, zweite und dritte Antenne jeweils auf einer gleichen oder unterschiedlichen Frequenz im Frequenzbereich von 20 kHz bis 140 kHz, insbesondere auf ca. 125 kHz, vorzugsweise zeitlich versetzt, senden.

19. Fahrzeugzugangssystem zur Autorisierung der Nutzung eines Kraftfahrzeugs, mit einer ersten und einer zweiten Antenne, einem ersten Rechner und einem Identifikationsgeber, in dem das Fahrzeugsystem geeignet ist, ein Verfahren nach einem der Ansprüche 1 bis 18 durchzuführen.

20. Fahrzeugzugangssystem zur Autorisierung der Nutzung eines Kraftfahrzeugs, **dadurch gekennzeichnet, dass** Fahrzeugzugangssystem die Ausführung eines Verfahrens nach einem der Ansprüche 1 bis 18 ausführt oder bewirkt und der Identifikationsgeber ein Funkschlüssel oder ein Smartphone, insbesondere mit einer Identifikationsgeber-Softwareanwendung, wie eine sog. App, ist.

21. Fahrzeugzugangssystem zur Autorisierung der Nutzung eines Kraftfahrzeugs nach Anspruch 20,
**dadurch gekennzeichnet, dass** der Identifikationsgeber ein mit einem Rechnerchip versehenes Smartphone, ein mit einem Rechnerchip versehener Funk-Fahrzeugschlüssel oder eine Chipkarte mit Rechnerchip ist.

22. Fahrzeugzugangssystem zur Autorisierung der Nutzung eines Kraftfahrzeugs nach Anspruch 20 oder 21,
**dadurch gekennzeichnet, dass** der Identifikationsgeber einen Sensor zur Bestimmung bzw. Ermittlung eines elektromagnetischen Feldes und/oder der Komponenten des elektromagnetischen Feldes aufweist, das von einer oder mehreren Fahrzeugantennen im Bereich des Identifikationsgebers erzeugt worden ist.

23. Wegfahrsperre zur Autorisierung der Nutzung eines Kraftfahrzeugs, mit einer ersten und einer zweiten Antenne, einem ersten Rechner und einem Identifikationsgeber, in dem die Wegfahrsperre geeignet ist, ein Verfahren nach einem der Ansprüche 1 bis 18 durchzuführen.

24. Computerprogrammprodukt zur Autorisierung der Nutzung eines Kraftfahrzeugs, umfassend Befehle, die bewirken, dass das Fahrzeugzugangssystem des Anspruchs 19 die Verfahrensschritte nach einem der Ansprüche 1 bis 18 ausführt.

## Claims

1. Method for authorizing the use of a motor vehicle, in particular a motor vehicle with two or four wheels which has at least a first and a second antenna, wherein the first antenna and the second antenna are located at a spatial distance from one another, using a portable identification provider, which has an identification provider antenna, having the following steps:
- the first vehicle antenna transmits a first signal, which is received by the identification provider antenna,
- the identification provider ascertains at least one of the spatial components of the first electromagnetic field of the received first signal, preferably using an angle-resolving magnetic field sensor,
- the second vehicle antenna transmits a second signal, which is received by the identification provider antenna,
- the identification provider ascertains at least one of the spatial components of the second electromagnetic field of the received second signal, in particular using the angle-resolving magnetic field sensor, and
- a first computer, in particular a computer in the identification provider, ascertains the angle at least between the ascertained spatial component of the first electromagnetic field of the received first signal and the ascertained spatial component of the second electromagnetic field of the received second signal, **characterized in that**, in a further step,
- the first vehicle antenna transmits not the first signal, but the second signal or a signal that is similar to the second signal, and the second vehicle antenna transmits not the second signal, but the first signal or a signal that is similar to the first signal, and the identification provider transmits a first authorization signal to the motor vehicle only if the ascertained first angle exceeds a predetermined first threshold value.

2. Method for authorizing the use of a motor vehicle according to Claim 1, **characterized in that** the predetermined first threshold value is transmitted from the motor vehicle to the identification provider, is received by the identification provider, and the first threshold value is compared by the identification provider with the ascertained first angle, and the identification provider transmits a first authorization signal to the motor vehicle only if the ascertained first angle exceeds a predetermined first threshold value.

3. Method for authorizing the use of a motor vehicle according to either of the preceding claims, **characterized in that** the first signal or a signal that is similar to the first signal and the second signal or a signal that is similar to the second signal are transmitted multiple times in alternation by the first or the second vehicle antenna, received by the identification provider, and the respectively ascertained temporally different angles are compared with the relevant predetermined first threshold value and subsequently with the relevant predetermined second threshold value, and, if the relevant first and second predetermined threshold values are respectively exceeded, a first or a second authorization signal for authorizing the use of the motor vehicle is transmitted to the motor vehicle.

4. Method for authorizing the use of a motor vehicle according to one of the preceding claims, **characterized in that** the predetermined first and/or a predetermined second threshold value is/are transmitted from the motor vehicle to the identification provider in an encrypted data form and/or hidden in other data.

5. Method for authorizing the use of a motor vehicle according to one of the preceding claims, **characterized in that** the first vehicle antenna transmits a first signal multiple times in immediate succession before the second vehicle antenna transmits a second signal once or multiple times in immediate succession, and the first and second signals are received by the identification provider for comparison with corresponding threshold values that have been transmitted from the motor vehicle to the identification provider.

6. Method for authorizing the use of a motor vehicle according to Claim 5, **characterized in that** the transmission of the first and/or second signal is performed in a random fashion by the motor vehicle.

7. Method for authorizing the use of a motor vehicle according to one of the preceding claims, **characterized in that** the signal strength or field strength of the first and/or second vehicle antenna is varied over the course of the authorization check.

8. Method for authorizing the use of a motor vehicle according to Claim 7, **characterized in that** the signal strength or field strength of the first and/or the second vehicle antenna is varied over the course of the authorization check in a random fashion by the motor vehicle.

9. Method for authorizing the use of a motor vehicle according to one of the preceding claims, **characterized in that** the time interval between the transmission of the first signal by the first vehicle antenna and the transmission of the second signal by the second vehicle antenna is selected to be temporally so short, but different from zero, that the identification provider carried by the driver is substantially not moved as the driver approaches the vehicle and therefore the ascertainment of the angle at least between the ascertained spatial component of the first electromagnetic field of the received first signal and the ascertained spatial component of the second electromagnetic field of the received second signal is substantially not falsified or substantially does not become unusable due to the movement of the driver or due to the associated movement of the identification provider.

10. Method for authorizing the use of a motor vehicle according to one of the preceding claims, **characterized in that** the motor vehicle has a further, third antenna, which is located at a spatial distance in each case from the first and the second antenna, and **in that**, analogously, the angle at least between the ascertained spatial component of the first electromagnetic field of the received first signal and the ascertained spatial component of the third electromagnetic field of a third signal, which is transmitted by the third antenna and received by the identification provider, is determined.

11. Method for authorizing the use of a motor vehicle according to one of the preceding claims, **characterized in that** the spatial components of the first electromagnetic field of the received first signal, which are ascertained by the identification provider, are the x-, y- and z-components of the electromagnetic field of a first Cartesian coordinate system.

12. Method for authorizing the use of a motor vehicle according to one of the preceding claims, **characterized in that** the spatial components of the second electromagnetic field of the received second signal, which are ascertained by the identification provider, are the x-, y- and z-components of the electromagnetic field, substantially the components with respect to the first Cartesian coordinate system; substantially, because the Cartesian coordinate system or reference system on which the ascertainment of the components is based spatially varies only slightly with minor movements of the identification provider in very short time periods between the repeated ascertainment of the angles.

13. Method for authorizing the use of a motor vehicle according to one of the preceding claims, **characterized in that** the spatial components, which are ascertained by the identification provider, of the third electromagnetic field of the received third signal are the x-, y- and z-components of the electromagnetic field, substantially those of the first Cartesian coordinate system.

14. Method for authorizing the use of a motor vehicle according to one of the preceding claims, **characterized in that** at least one first vector from the x-, y- and z-components, which are ascertained by the identification provider, of the first electromagnetic field of the received first signal and one second vector of the x-, y- and z-components, which are ascertained by the identification provider, of the second electromagnetic field of the received second signal are formed by computation, and the scalar product thereof is formed by computation from said two vectors.

15. Method for authorizing the use of a motor vehicle according to one of the preceding claims, **characterized in that** the scalar product is used to determine by computation the angle between the two vectors.

16. Method for authorizing the use of a motor vehicle according to one of the preceding claims, **characterized in that** the ascertained angle exceeds a predetermined threshold value of substantially zero degrees, in particular a threshold value of greater than 1 to 10 degrees, in particular 1 to 5 degrees.

17. Method for authorizing the use of a motor vehicle according to one of the preceding claims, **characterized in that** the threshold value, which is greater than zero degrees, increases as the distance of the identification provider from the vehicle decreases, wherein the distance is determined in particular by a time-of-flight measurement between the signals that are exchanged between the vehicle and the identification provider.

18. Method for authorizing the use of a motor vehicle according to one of the preceding claims, **characterized in that** the first, second and third antennas transmit, preferably with a time offset, respectively at an identical or different frequency in the frequency range of 20 kHz to 140 kHz, in particular at approx. 125 kHz.

19. Vehicle access system for authorizing the use of a motor vehicle, having a first and a second antenna, a first computer and an identification provider, in which the vehicle system is suitable for carrying out a method according to one of Claims 1 to 18.

20. Vehicle access system for authorizing the use of a motor vehicle, **characterized in that** the vehicle access system carries out or effects the performance of a method according to one of Claims 1 to 18, and the identification provider is a radio key or a smart phone, in particular with an identification provider software application, such as what is known as an app.

21. Vehicle access system for authorizing the use of a motor vehicle according to Claim 20, **characterized in that** the identification provider is a smart phone provided with a computer chip, a radio vehicle key provided with a computer chip, or a chip card having a computer chip.

22. Vehicle access system for authorizing the use of a motor vehicle according to Claim 20 or 21, **characterized in that** the identification provider has a sensor for determining or ascertaining an electromagnetic field and/or the components of the electromagnetic field that was generated by one or more vehicle antennas within the region of the identification provider.

23. Immobilizer for authorizing the use of a motor vehicle, having a first and a second antenna, a first computer and an identification provider, in which the immobilizer is suitable for carrying out a method according to one of Claims 1 to 18.

24. Computer program product for authorizing the use of a motor vehicle, comprising commands that have the effect that the vehicle access system of Claim 19 carries out the method steps according to one of Claims 1 to 18.

## Revendications

1. Procédé d'autorisation de l'utilisation d'un véhicule automobile, en particulier d'un véhicule automobile à deux ou quatre roues, qui présente au moins une première et une deuxième antenne, la première antenne et la deuxième antenne étant espacées spatialement l'une de l'autre, au moyen d'un transmetteur d'identification portable qui présente une antenne de transmetteur d'identification, comprenant les étapes suivantes :
- la première antenne de véhicule émet un premier signal qui est reçu par l'antenne de transmetteur d'identification,
- le transmetteur d'identification établit au moins l'une des composantes spatiales du premier champ électromagnétique du premier signal reçu, de préférence en utilisant un capteur de champ magnétique à résolution angulaire,
- la deuxième antenne de véhicule automobile émet un deuxième signal qui est reçu par l'antenne de transmetteur d'identification,
- le transmetteur d'identification établit au moins l'une des composantes spatiales du deuxième champ électromagnétique du deuxième signal reçu, en particulier en utilisant le capteur de champ magnétique à résolution angulaire, et
- un premier calculateur, en particulier un calculateur dans le transmetteur d'identification, établit l'angle au moins entre la composante spatiale établie du premier champ électromagnétique du premier signal reçu et la composante spatiale établie du deuxième champ électromagnétique du deuxième signal reçu,
**caractérisé en ce que** dans une étape supplémentaire
- la première antenne de véhicule émet au lieu du premier signal le deuxième signal ou un signal similaire au deuxième signal, et la deuxième antenne de véhicule émet au lieu du deuxième signal le premier signal ou un signal similaire au premier signal, et le transmetteur d'identification n'envoie un premier signal d'autorisation au véhicule automobile que si le premier angle établi dépasse une première valeur prédéterminée.

2. Procédé d'autorisation de l'utilisation d'un véhicule automobile selon la revendication 1, **caractérisé en ce que** la première valeur seuil prédéterminée est envoyée du véhicule automobile au transmetteur d'identification, est reçue par le transmetteur d'identification, et la première valeur seuil du transmetteur d'identification est comparée avec le premier angle établi, et le transmetteur d'identification n'envoie un premier signal d'autorisation au véhicule automobile que si le premier angle établi dépasse une première valeur seuil prédéterminée.

3. Procédé d'autorisation de l'utilisation d'un véhicule automobile selon l'une quelconque des revendications précédentes, **caractérisé en ce que** le premier signal ou un signal similaire au premier signal et le deuxième signal ou un signal similaire au deuxième signal sont envoyés de manière répétée en alternance par la première ou la deuxième antenne de véhicule, sont reçus par le transmetteur d'identification, et les angles différents dans le temps, respectivement établis, sont comparés avec la première valeur seuil prédéterminée en question, et sont par la suite comparés avec la deuxième valeur seuil prédéterminée en question, et en cas de dépassement respectif de la première et de la deuxième valeur seuil prédéterminée en question, un premier ou un deuxième signal d'autorisation est envoyé au véhicule automobile pour autoriser l'utilisation du véhicule automobile.

4. Procédé d'autorisation de l'utilisation d'un véhicule automobile selon l'une quelconque des revendications précédentes, **caractérisé en ce que** la première valeur seuil prédéterminée et/ou une deuxième valeur seuil prédéterminée sont envoyées par le véhicule automobile au transmetteur d'identification sous une forme de données cryptée et/ou masquées dans d'autres données.

5. Procédé d'autorisation de l'utilisation d'un véhicule automobile selon l'une quelconque des revendications précédentes, **caractérisé en ce que** la première antenne de véhicule émet de manière répétée, directement l'un après l'autre un premier signal avant que la deuxième antenne de véhicule n'émette une ou plusieurs fois directement l'un après l'autre un deuxième signal, et les premiers et deuxièmes signaux sont reçus par le transmetteur d'identification pour une comparaison avec des valeurs seuil correspondantes, transmises du véhicule automobile au transmetteur d'identification.

6. Procédé d'autorisation de l'utilisation d'un véhicule automobile selon la revendication 5, **caractérisé en ce que** l'émission du premier et/ou du deuxième signal est effectuée de manière aléatoire par le véhicule automobile.

7. Procédé d'autorisation de l'utilisation d'un véhicule automobile selon l'une quelconque des revendications précédentes, **caractérisé en ce que** l'intensité de signal ou l'intensité de champ de la première et/ou deuxième antenne de véhicule est amenée à varier au cours de la vérification d'autorisation.

8. Procédé d'autorisation de l'utilisation d'un véhicule automobile selon la revendication 7, **caractérisé en ce que** l'intensité de signal ou l'intensité de champ de la première et/ou deuxième antenne de véhicule est amenée à varier au cours de la vérification d'autorisation de manière aléatoire par le véhicule automobile.

9. Procédé d'autorisation de l'utilisation d'un véhicule automobile selon l'une quelconque des revendications précédentes, **caractérisé en ce que** l'intervalle de temps entre l'émission du premier signal par la première antenne de véhicule et l'émission du deuxième signal par la deuxième antenne de véhicule est sélectionné pour être si bref, mais différent de zéro, que le transmetteur d'identification emporté par le conducteur n'est substantiellement pas déplacé lorsque le conducteur s'approche du véhicule automobile, et donc l'établissement de l'angle, au moins entre la composante spatiale établie du premier champ électromagnétique du premier signal reçu et la composante spatiale établie du deuxième champ électromagnétique du deuxième signal reçu, n'est substantiellement pas faussé ou rendu inutilisable par le déplacement du conducteur ou le déplacement associé du transmetteur d'identification.

10. Procédé d'autorisation de l'utilisation d'un véhicule automobile selon l'une quelconque des revendications précédentes, **caractérisé en ce que** le véhicule automobile présente une troisième antenne supplémentaire qui est espacée spatialement de la première et de la deuxième antenne respectivement, et **en ce que** de manière analogue ou identique, l'angle au moins entre la composante spatiale établie du premier champ électromagnétique du premier signal reçu et la composante spatiale établie du troisième champ électromagnétique d'un troisième signal émis par la troisième antenne et reçu par le transmetteur d'identification est déterminé.

11. Procédé d'autorisation de l'utilisation d'un véhicule automobile selon l'une quelconque des revendications précédentes, **caractérisé en ce que** les composantes spatiales du premier champ électromagnétique du premier signal reçu, établies par le transmetteur d'identification, sont les composantes x, y et z du champ électromagnétique d'un premier système de coordonnées cartésiennes.

12. Procédé d'autorisation de l'utilisation d'un véhicule automobile selon l'une quelconque des revendications précédentes, **caractérisé en ce que** les composantes spatiales du deuxième champ électromagnétique du deuxième signal reçu, établies par le transmetteur d'identification, les composantes x, y et z du champ électromagnétique, sont substantiellement les composantes par rapport au premier système de coordonnées cartésiennes, substantiellement parce que le système de coordonnées cartésiennes ou le système de référence à la base de l'établissement des composantes ne varie spatialement que très peu pour de légers déplacements du transmetteur d'identification pendant des périodes très courtes entre l'établissement répété des angles.

13. Procédé d'autorisation de l'utilisation d'un véhicule automobile selon l'une quelconque des revendications précédentes, **caractérisé en ce que** les composantes spatiales du troisième champ électromagnétique du troisième signal reçu, établies par le transmetteur d'identification, les composantes x, y et z du champ électromagnétique, sont substantiellement celles du premier système de coordonnées cartésiennes.

14. Procédé d'autorisation de l'utilisation d'un véhicule automobile selon l'une quelconque des revendications précédentes, **caractérisé en ce qu'**au moins un premier vecteur est formé arithmétiquement à partir des composantes x, y et z du premier champ électromagnétique du premier signal reçu, établies par le transmetteur d'identification, et un deuxième vecteur est formé arithmétiquement à partir des composantes x, y et z du deuxième champ électromagnétique du deuxième signal reçu, établies par le transmetteur d'identification, et un produit scalaire est formé arithmétiquement à partir de ces deux vecteurs.

15. Procédé d'autorisation de l'utilisation d'un véhicule automobile selon l'une quelconque des revendications précédentes, **caractérisé en ce que** l'angle entre les deux vecteurs est déterminé arithmétiquement à l'aide du produit scalaire.

16. Procédé d'autorisation de l'utilisation d'un véhicule automobile selon l'une quelconque des revendications précédentes, **caractérisé en ce que** l'angle établi dépasse une valeur seuil prédéterminée de substantiellement zéro degré, en particulier une valeur seuil supérieure à 1 à 10 degrés, en particulier à 1 à 5 degrés.

17. Procédé d'autorisation de l'utilisation d'un véhicule automobile selon l'une quelconque des revendications précédentes, **caractérisé en ce que** la valeur seuil, qui est supérieure à zéro degré, augmente lorsque la distance du transmetteur d'identification au véhicule diminue, la distance étant déterminée en particulier par une mesure de temps de propagation entre les signaux qui sont échangés entre le véhicule et le transmetteur d'identification.

18. Procédé d'autorisation de l'utilisation d'un véhicule automobile selon l'une quelconque des revendications précédentes, **caractérisé en ce que** la première, la deuxième et la troisième antenne émettent respectivement sur une fréquence identique ou différente dans la plage de fréquences de 20 kHz à 140 kHz, en particulier à environ 125 kHz, en particulier en différé.

19. Système d'accès à un véhicule pour autoriser l'utilisation d'un véhicule automobile, comprenant une première et une deuxième antenne, un premier calculateur et un transmetteur d'identification, le système d'accès de véhicule étant adapté pour exécuter un procédé selon l'une quelconque des revendications 1 à 18.

20. Système d'accès à un véhicule pour autoriser l'utilisation d'un véhicule automobile, **caractérisé en ce que** le système d'accès à un véhicule procède à, ou provoque l'exécution d'un procédé selon l'une quelconque des revendications 1 à 18, et le transmetteur d'identification est une clé à télécommande ou un smartphone, en particulier avec une application logicielle de transmetteur d'identification, telle qu'une appli.

21. Système d'accès à un véhicule pour autoriser l'utilisation d'un véhicule automobile selon la revendication 20, **caractérisé en ce que** le transmetteur d'identification est un smartphone équipé d'une puce informatique, une clé de véhicule à télécommande équipée d'une puce informatique ou une carte à puce avec une puce informatique.

22. Système d'accès à un véhicule pour autoriser l'utilisation d'un véhicule automobile selon la revendication 20 ou 21, **caractérisé en ce que** le transmetteur d'identification présente un capteur pour déterminer ou établir un champ électromagnétique et/ou les composantes du champ électromagnétique qui a été généré par une ou plusieurs antennes de véhicule au niveau du transmetteur d'identification.

23. Dispositif antidémarrage pour autoriser l'utilisation d'un véhicule automobile, comprenant une première et une deuxième antenne, un premier calculateur et un transmetteur d'identification, le dispositif antidémarrage étant adapté pour exécuter un procédé selon l'une quelconque des revendications 1 à 18.

24. Produit de programme informatique pour autoriser l'utilisation d'un véhicule automobile, comprenant des instructions qui font que le système d'accès à un véhicule selon la revendication 19 exécute les étapes de procédé selon l'une quelconque des revendications 1 à 18.
